# EUROPEAN PATENT SPECIFICATION

(11) **EP 0 368 386 B1**
(45) Date of publication and mention of the grant of the patent: **04.08.1993**
(21) Application number: 89202721.0
(22) Date of filing: 26.10.1989
(51) Int. Cl.: B62D 1/04

(54) **Steering wheel for motor vehicles with connecting plates between spokes and rim**
Lenkrad für Kraftfahrzeuge mit Befestigungsplatten zwischen Speichen und Felge
Volant de direction pour véhicules automobiles avec plaques de connexion entre les bras et la jante

(30) Priority: 09.11.1988 IT 2212288 U
(43) Date of publication of application: 16.05.1990
(73) Proprietor: MOMO S.p.A., I-20129 Milan (IT)
(72) Inventor: Cattaneo, Marco, I-27100 Pavia (IT)
(74) Representative: Mittler, Enrico

(56) References cited:
- DE-A- 3 508 380
- FR-A- 2 578 802
- GB-A- 546 935

## Description

The present invention relates to a steering wheel for motor vehicles with covering plates between spokes and rim.

The conventional steering wheel of a motor vehicle is normally constituted by a central part provided with a system for fastening it to the steering column, from which there extends a plurality of radial spokes connected with an external circular rim, either directly or through connecting plates as shown in DE-A-3 508 380.

In the usual motor vehicle steering wheels the junction areas between the spokes and the rim constitute critical points as regards aesthetics and cleanliness. In leather steering wheels, for example, the finish at the base of the spokes leaves frequently something to be desired. On the other hand, in the case of wooden steering wheels, residues of rim paint may remain, requiring considerable expenditure of time for their removal. Also during use the above junction areas tend to become places where dust collects, requiring accurate periodical cleaning. Lastly, the use of the driver's hands for the maneuverability of the steering wheel is not ideal in those areas.

The primary object of the present invention is that of accomplishing a steering wheel capable of solving the above problems arising with the connection of spokes and rim.

According to the invention such object is attained with a steering wheel for motor vehicles comprising a central part from which there extends a plurality of radial spokes fitted in an external circular rim, characterized in that the external ends of the spokes at their connecting areas with the external rim are provided with shaped covering plates.

The use of such plates substantially improves the aesthetics of the steering wheel, since the plates themselves constitute a pleasant decorative element, which covers the manufacturing defects, if any.

Moreover, the connecting areas of the spokes with the rim no longer constitute areas where dust and dirt collect, so that it is no longer necessary to proceed with an accurate periodic cleaning of the areas themselves.

Lastly, if an appropriate anatomical shape is given to the plates, the maneuverability of the steering wheel is also improved.

These and other characteristics of the present invention shall be made evident by the following detailed description of its embodiments illustrated as an example in the enclosed drawings, wherein:
Fig. 1 is a plan view of a steering wheel according to the present invention;
Fig. 2 is a cross-sectional view taken along the line II-II of Fig. 1, which shows in an enlarged scale one of the connecting areas between the spokes and the external rim of the above steering wheel;

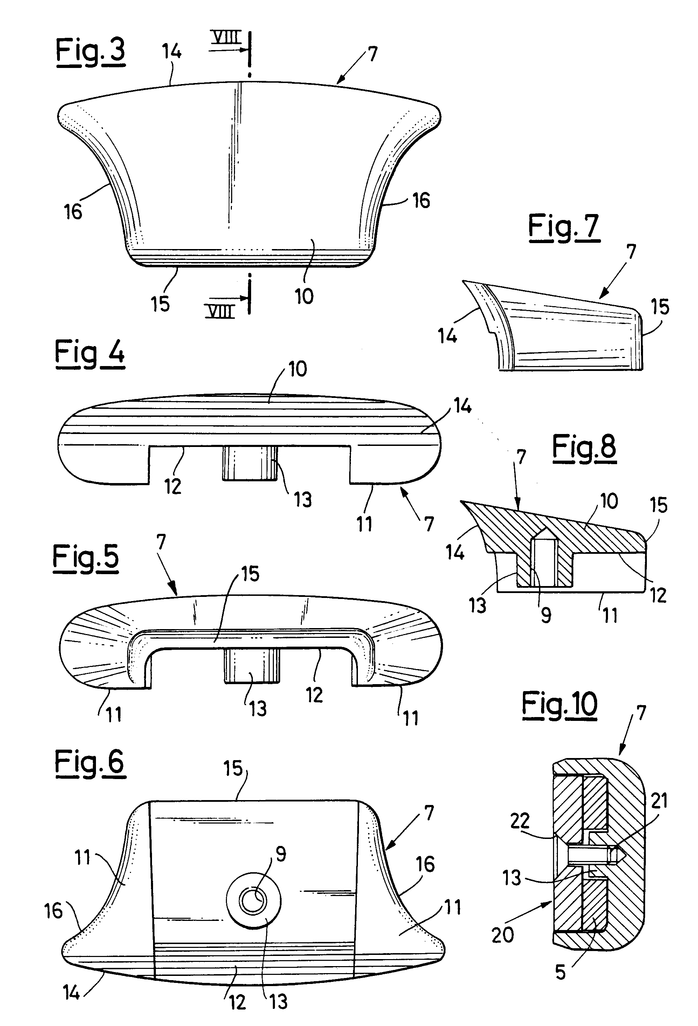

Fig. 3 shows a plan view from above of one of the covering plates superimposed over said connecting areas;
Fig. 4 shows said plate seen from above with respect to Fig. 3;
Fig. 5 shows said plate seen from below with respect to Fig. 3;
Fig. 6 shows said plate in a plan view from below;
Fig. 7 shows said plate seen from the left hand side with respect to Fig. 3;
Fig. 8 shows said plate seen in cross-section along the line VIII-VIII of Fig. 3;
Fig. 9 shows in cross-section as in Fig. 2 a different type of fastening of the plate of Fig.s 3-8;
Fig. 10 shows the detail of Fig. 9 in cross-section along the line X-X of the same figure.

With reference to Fig.s 1 and 2, a steering wheel 1 for motor vehicles has a central part 2 in which there are provided a central positioning hole 4 and a plurality of lateral fastening holes 3 for the application to the steering column of a motor vehicle. From the central part 2 there extends in a radial direction a plurality of spokes 5, which fit in a rim 6 at the other extremity. At the point wherein the spokes 5 meet the rim 6 there is provided a plurality of shaped plates 7 which cover the connecting areas between said spokes 5 and said rim 6.

These plates 7, equal in number to that of the spokes 5, are fastened to the spokes 5 by means of a screw 8 which passes through the spoke and is screwed into a suitable drilled seat 9 obtained in the plates 7.

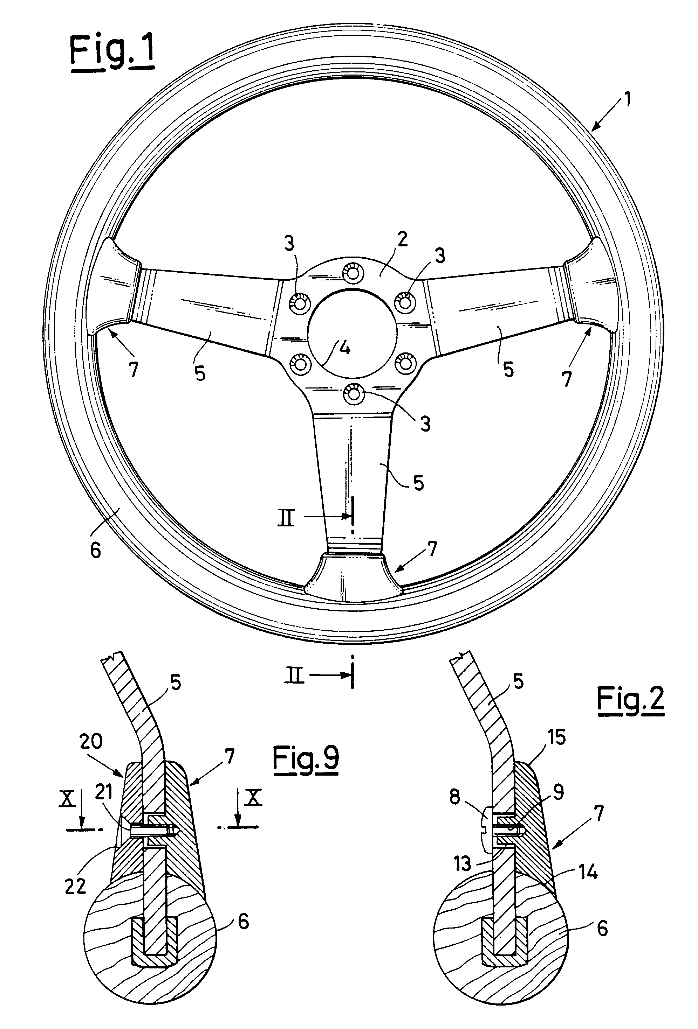

These plates, in the illustrated example, are shaped as shown in Fig.s from 3 to 8 and comprise an open external surface 10 having an inclined profile with rounded concave lateral sides 16 and an internal surface 11 interrupted by a groove 12 which extends along the entire height of the plate 7 and whose internal dimensions are equal to the external dimensions of a spoke at the junction point. In the central part of the groove 12 there is a rise 13 in which there is obtained a drilled seat 9, in which the fastening screw 8 is screwed with its head reacting against the face of the spoke opposite that on which the plate rests. An extremity 14 is shaped so as to mate perfectly with the steering wheel's rim 6 (Fig. 2) so as not to cause a discontinuity in the shape. The other extremity 15 is in turn rounded and tapered so as to mate perfectly with the surface of the spoke 5 on which the plate 7 is fitted.

As an alternative, as shown in Fig.s 9 and 10, the same plate of Fig.s 3-8 or one slightly different may be fastened to the respective spoke of the steering wheel by means of a complementary counter-plate 20, which together with the plate 7 embraces the spoke 5 in the area where it joins the rim 6. In which case it is possible to use a fastening screw 21 having a conical head inserted in a suitable seat 22 of the counter-plate 20, with consequent further improvement in the aesthetics and in the maneuverability of the steering wheel.

The plate described above may be applied to any steering wheel for motor vehicles, even if it is very different from that of Fig. 1, so as to hide from view the areas wherein dust or any manufacturing residues may accumulate, avoiding the necessity of an accurate cleaning in those areas. In addition, the curvilinear shape of the plate gives the steering wheel a greater practicality of use as it is of an anatomical type. Lastly, the plate improves the aesthetics of the steering wheel itself as it constitutes a decorative element.

Plate 7 may be of metallic material, and it is also possible with the occasion to provide a particular coating of this plate 7 to meet the different tastes of the motor car enthusiast.

## Claims

1. Steering wheel for motor vehicles comprising a central part (2) from which there extends a plurality of radial spokes (5) fitted in an external circular rim (6), characterized in that the external ends of the spokes (5) at their connecting areas with the external rim (6) are provided with shaped covering plates (7).

2. Steering wheel for motor vehicles according to claim 1, characterized in that said plates (7) include an external open surface (10) having an inclined profile with rounded concave sides (16) which aesthetically and functionally mate the shape of the radial spokes (5) and the circular rim (6) and an internal surface (11) interrupted by a groove (12) extending along the entire height of the plate (7) and whose internal dimensions are equal to the external dimensions of a spoke (5) of a steering wheel (1), there being provided means (8; 20, 21) for fastening said plate (7) to said spokes (5).

3. Steering wheel for motor vehicles according to claim 2, characterized in that said fastening means (8; 20, 21) are constituted by a screw (8) with its head reacting against the face of the spoke (5) opposite to that against which the plate (7) rests.

4. Steering wheel for motor vehicles according to claim 2, characterized in that said fastening means (8; 20, 21) comprise a counter-plate (20) shaped in a complementary way with respect to said plate (7) and applied to the face of the spoke (5) opposite to that against which the plate (7) rests, and a fastening screw (21) with its head embedded in a seat (22) of said counter-plate (20).

5. Steering wheel for motor vehicles according to claim 1, characterized in that said plates (7) are of metallic material.

## Patentansprüche

1. Steuerrad für Kraftfahrzeuge mit einem Mittelteil (2), von dem sich eine Mehrzahl von radialen Speichen (5) erstreckt, die in einen äußeren kreisförmigen Lenkkranz (6) eingepaßt sind, dadurch gekennzeichnet, daß die äußeren Enden der Speichen (5) an ihren Verbindungsgebieten mit dem äußeren Lenkkranz (6) mit geformten, abdeckenden Platten (7) versehen sind.

2. Steuerrad für Kraftfahrzeuge nach Anspruch 1,
dadurch gekennzeichnet, daß die Platten (7) eine äußere offene Oberfläche (10) mit einem geneigten Profil mit abgerundeten konkaven Seiten (16), die ästhetisch und funktionell zu der Form der radialen Speichen (5) und dem kreisförmigen Lenkkranz (6) passen, und eine innere Oberfläche (11), die von einer Pille (12) unterbrochen ist, die sich entlang der gesamten Höhe der Platte (7) erstreckt und deren innere Abmessungen gleich den äußeren Abmessungen einer Speiche (5) eines Steuerrades (1) aufweisen, wodurch Mittel (8; 20, 21) zum Befestigen der Platte (7) an den Speichen (5) vorgesehen werden.

3. Steuerrad für Kraftfahrzeuge nach Anspruch 2,
dadurch gekennzeichnet, daß die Befestigungsmittel (8; 20, 21) durch eine Schraube (8) dargestellt sind, deren Kopf gegen die Fläche der Speiche (5) wirkt, die der gegenüberliegt, auf der die Platte (7) ruht.

4. Steuerrad für Kraftfahrzeuge nach Anspruch 2,
dadurch gekennzeichnet, daß die Befestigungsmittel (8; 20, 21) eine Gegenplatte (20) aufweisen, die auf eine komplementäre Weise in Bezug auf die Platte (7) geformt ist und an die Fläche der Speiche (5) gelegt ist, die der gegenüberliegt, auf der die Platte (7) ruht, und eine Befestigungsschraube (21) deren Kopf in einem Sitz (22) der Gegenplatte (20) aufgenommen ist.

5. Steuerrad für Kraftfahrzeuge nach Anspruch 1,
dadurch gekennzeichnet, daß die Platten (7) aus metallischem Material sind.

## Revendications

1. Volant de direction pour véhicules automobiles, comprenant une partie centrale (2) de laquelle s'étendent plusieurs bras radiaux (5) montés dans une jante circulaire externe (6), caractérisé en ce que les extrémités externes des bras (5) sont munies, au niveau de leurs zones de liaison avec la jante externe (6), de plaques de recouvrement (7) profilées.

2. Volant de direction pour véhicules automobiles selon la revendication 1, caractérisé en ce que lesdites plaques (7) comprennent une surface externe ouverte (10) présentant un profil incliné à côtés concaves arrondis (16) qui s'adaptent du point de vue esthétique et fonctionnel à la forme des bras radiaux (5) et de la jante circulaire (6) et une surface interne (11) interrompue par une rainure (12) qui s'étend sur toute la hauteur de la plaque (7) et dont les dimensions internes sont égales aux dimensions externes d'un bras (5) d'un volant de direction (1), des dispositifs (8 ; 20, 21) pour fixer ladite plaque (7) sur lesdits bras (5) étant prévus.

3. Volant de direction pour véhicules automobiles selon la revendication 2, caractérisé en ce que lesdits dispositifs de fixation (8 ; 20, 21) sont constitués par une vis (8) dont la tête réagit contre la face du bras (5) qui est opposée à celle contre laquelle s'appuie la plaque (7).

4. Volant de direction pour véhicules automobiles selon la revendication 2, caractérisé en ce que lesdits dispositifs de fixation (8 ; 20, 21) comprennent une contreplaque (20) profilée de manière complémentaire à ladite plaque (7) et appliquée à la face du bras (5) opposée à celle contre laquelle s'appuie la plaque (7), et une vis de fixation (21) dont la tête est incluse dans un logement (22) de ladite contreplaque (20).

5. Volant de direction pour véhicules automobiles selon la revendication 1, caractérisé en ce que lesdites plaques (7) sont en matériau métallique.
